# EUROPEAN PATENT APPLICATION

(11) **EP 4 439 516 A1**
(43) Date of publication of application: **02.10.2024**
(21) Application number: 24166119.8
(22) Date of filing: 26.03.2024
(51) Int. Cl.: G08C 17/00, G05D 1/221, G07C 9/00

(54) **MOVING OBJECT, REMOTE CONTROL DEACTIVATION SYSTEM, AND REMOTE CONTROL DEACTIVATION METHOD**

(30) Priority: 28.03.2023 JP 2023050972
(71) Applicant: TOYOTA JIDOSHA KABUSHIKI KAISHA, Toyota-shi, Aichi-ken, 471-8571 (JP)
(72) Inventor: IKEDA, Keigo, Toyota-shi, Aichi-ken, 471-8571 (JP); YOKOYAMA, Daiki, Toyota-shi, Aichi-ken, 471-8571 (JP)
(74) Representative: Cabinet Beau de Loménie

(57) **Abstract**

A moving object (100) movable by remote control includes: an acquisition unit configured to acquire deactivation information indicating that remote control for another moving object movable by remote control is deactivated, the another moving object being different from the moving object; and a deactivation execution unit configured to deactivate remote control for the moving object when the acquisition unit acquires the deactivation information.

## Description

### CROSS REFERENCE TO RELATED APPLICATIONS

This application claims priority to Japanese Patent Application No. 2023-050972, filed March 28, 2023, the disclosure of which is incorporated by reference herein in its entirety and to which the person of the art can refer when considering the present disclosure.

### BACKGROUND

### FIELD

The present disclosure relates to a moving object, a remote control deactivation system, and a remote control deactivation method.

In a manufacturing process of a vehicle, techniques to run a vehicle by remote control have been known (for example, Japanese Patent Application Publication (Translation of PCT Application) No. 2017-538619).

If a moving object can be moved by remote control, there is a possibility that a third party remotely controls the moving object.

### SUMMARY

The present disclosure can be implemented according to the following aspects.
(1) According to a first aspect of the present disclosure, a moving object movable by remote control is provided. This moving object includes: an acquisition unit configured to acquire deactivation information indicating that remote control for another moving object movable by remote control is deactivated, the another moving object being different from the moving object; and a deactivation execution unit configured to deactivate remote control for the moving object when the acquisition unit acquires the deactivation information.
   According to the moving object of this aspect, when the deactivation information indicating that the another moving object is deactivated is acquired, the remote control of the moving object is deactivated. Accordingly, it is possible to prevent the remote control of the moving object by a third party.
(2) The moving object of the above aspect may move by remote control in a factory where the moving object is manufactured.
   According to the moving object of this aspect, it is possible to prevent the remote control of the moving object by a third party while allowing the remote control of the moving object in the factory.
(3) In the moving object of the above aspect, the deactivation execution unit may deactivate the remote control for the moving object after a predetermined time period has elapsed since the acquisition unit acquired the deactivation information.
   According to the moving object of this aspect, it is possible to give a grace period before executing the deactivation of the remote control.
(4) In the moving object of the above aspect, the deactivation execution unit may deactivate the remote control for the moving object when the moving object has moved a predetermined distance after the acquisition unit acquired the deactivation information.
   According to the moving object of this aspect, it is possible to give a grace period before executing the deactivation of the remote control.
(5) In the moving object of the above aspect, the deactivation execution unit may deactivate the remote control for the moving object when the moving object arrives at a position where the remote control for the another moving object is deactivated after the acquisition unit acquired the deactivation information.
   According to the moving object of this aspect, it is possible to execute the deactivation of the remote control of its own at the same position as the another moving object.
(6) In the moving object of the above aspect, the acquisition unit may acquire the deactivation information from the another moving object.
   According to the moving object of this aspect, it is possible to directly transfer the deactivation information between the moving object and the another moving object.
(7) According to a second aspect of the present disclosure, a remote control deactivation system is provided. This remote control deactivation system includes: a first moving object configured to be movable by remote control; a second moving object configured to be movable by remote control, the second moving object including a deactivation execution unit configured to deactivate remote control for the second moving object; an acquisition unit configured to acquire deactivation information indicating that remote control for the first moving object is deactivated; and a deactivation command unit configured to supply a command for deactivating the remote control for the second moving object to the deactivation execution unit when the acquisition unit acquires the deactivation information.
   According to the remote control deactivation system of this aspect, the remote control of the moving object is deactivated when the deactivation information indicating that another moving object is deactivated is acquired. Accordingly, it is possible to prevent the remote control of the moving object by a third party.
(8) According to a third aspect of the present disclosure, a remote control deactivation device is provided. This remote control deactivation device includes: an acquisition unit configured to acquire deactivation information indicating that remote control for a first moving object movable by remote control is deactivated; and a deactivation command unit configured to supply a command for deactivating remote control for a second moving object movable by remote control to a deactivation execution unit when the deactivation information is acquired, the deactivation execution unit being installed in the second moving object and deactivating the remote control for the second moving object which is different from the first moving object.
   According to the remote control deactivation device of this aspect, the remote control of the moving object is deactivated when the deactivation information indicating that another moving object is deactivated is acquired. Accordingly, it is possible to prevent the remote control of the moving object by a third party.
(9) According to a fourth aspect of the present disclosure, a moving object movable by remote control is provided. This moving object includes: a communication device which receives a command supplied from outside when remote control of another moving object movable by remote control is deactivated, the another moving object being different from the moving object; and a deactivation execution unit which deactivates remote control of the moving object in response to the command.
   According to the moving object of this aspect, the remote control of the moving object is deactivated when the deactivation information indicating that the another moving object is deactivated is acquired. Accordingly, it is possible to prevent the remote control of the moving object by a third party.
(10) According to a fifth aspect of the present disclosure, a remote control deactivation method is provided. This remote control deactivation method includes: detecting that remote control for a first moving object movable by remote control is deactivated; and deactivating remote control for a second moving object movable by remote control when detecting that the remote control for the first moving object is deactivated, the second moving object being different from the first moving object.

According to the remote control deactivation method of this aspect, the remote control of the moving object is deactivated when detecting that another moving object is deactivated. Accordingly, it is possible to prevent the remote control of the moving object by a third party.

The present disclosure can also be realized in various forms other than the moving object, the remote control deactivation system, the remote control deactivation device, and the remote control deactivation method. For example, it can be realized in the form of a computer program, a recording medium on which the computer program is recorded, or the like.

### BRIEF DESCRIPTION OF THE DRAWINGS

Fig. 1 is a diagram illustrating a configuration of a remote control system in a first embodiment;
Fig. 2 is a diagram illustrating a configuration of a vehicle in the first embodiment;
Fig. 3A is a diagram illustrating vehicles running by remote control;
Fig. 3B is a flowchart illustrating a procedure of running control of the vehicle in the first embodiment;
Fig. 4 is a flowchart illustrating contents of a first deactivation process in the first embodiment;
Fig. 5 is a flowchart illustrating contents of a second deactivation process in the first embodiment;
Fig. 6 is a diagram illustrating how remote control of vehicles is deactivated;
Fig. 7 is a diagram illustrating a configuration of a vehicle in a second embodiment;
Fig. 8 is a flowchart illustrating contents of a second deactivation process in the second embodiment;
Fig. 9 is a diagram illustrating a configuration of a remote control system in a third embodiment;
Fig. 10 is a flowchart illustrating contents of a first deactivation process in the third embodiment;
Fig. 11 is a flowchart illustrating contents of a deactivation command process in the third embodiment;
Fig. 12 is a flowchart illustrating contents of a second deactivation process in the third embodiment; and
Fig. 13 is a diagram illustrating how remote control of vehicles is deactivated.

### DETAILED DESCRIPTION

### A. First Embodiment

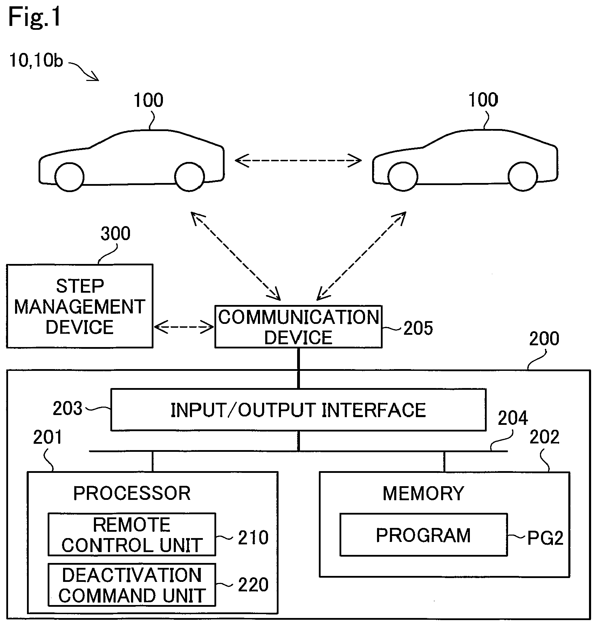

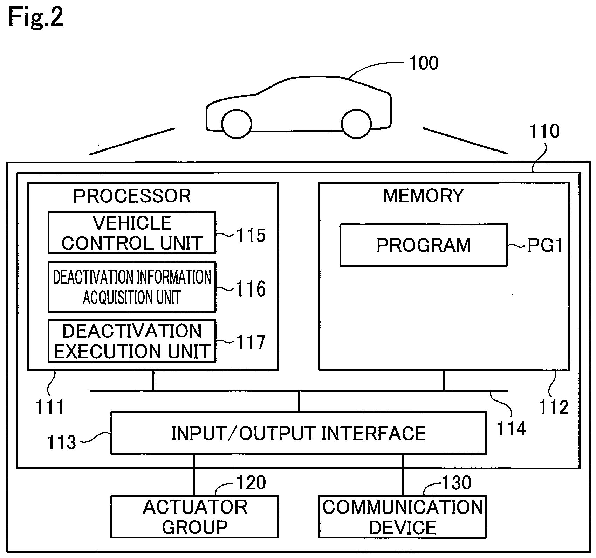

Fig. 1 is a diagram illustrating a configuration of a remote control system 10 in a first embodiment. Fig. 2 is a diagram illustrating a configuration of a vehicle 100 included in the remote control system 10. The remote control system 10 shown in Fig. 1 is used to move a moving object by remote control in a factory where the moving object is manufactured. The remote control system 10 can deactivate the remote control of the moving object. Therefore, the remote control system 10 may be referred to as a remote control deactivation system.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The remote control system 10 has a plurality of vehicles 100 configured to be capable of running by remote control and a remote control device 200 for remotely controlling the vehicles 100. The remote control device 200 is placed in a factory where the vehicles 100 are manufactured, for example. Note that Fig. 1 illustrates two vehicles 100, but the number of the vehicles 100 included in the remote control system 10 is not limited to two and may be three or more.

As shown in Fig. 2, each of the vehicles 100 has a vehicle control device 110 for controlling each section of the own vehicle, an actuator group 120 which is driven under control by the vehicle control device 110, and a communication device 130 for wireless communication with the other vehicle and the remote control device 200. The other vehicle means the vehicle 100 other than the own vehicle included in the remote control system 10. In the present embodiment, the actuator group 120 includes an actuator of a driving device to accelerate the own vehicle, an actuator of a steering device to change a traveling direction of the own vehicle, and an actuator of a braking device to decelerate the own vehicle. The driving device includes a battery, a motor for running that is driven by a power of the battery, and a driving wheel rotated by the motor for running. The actuator of the driving device includes a motor for running. Note that the actuator group 120 may further include an actuator to swing a wiper of the own vehicle, an actuator to open/close a power window of the own vehicle, or the like.

The vehicle control device 110 is configured with a computer equipped with a processor 111, a memory 112, an input/output interface 113, and an internal bus 114. A processor 111, a memory 112, and an input/output interface 113 are connected through an internal bus 114 such that they can bidirectionally communicate with each other. The input/output interface 113 is connected with the actuator group 120 and the communication device 130. The memory 112 stores a program PG1. In the present embodiment, the processor 111 executes the program PG1, thereby functioning as a vehicle control unit 115, a deactivation information acquisition unit 116, and a deactivation execution unit 117.

The vehicle control unit 115 controls the actuator group 120. When a driver is in the own vehicle, the vehicle control unit 115 can run the own vehicle by controlling the actuator group 120 in response to operation by the driver. The vehicle control unit 115 can also run the own vehicle by controlling the actuator group 120 in response to a control command transmitted from the remote control device 200 regardless of whether or not the driver is in the own vehicle.

The deactivation information acquisition unit 116 acquires deactivation information through the communication device 130. The deactivation information refers to information indicating that remote control of the other vehicle is deactivated. In the present embodiment, the deactivation information acquisition unit 116 acquires the deactivation information from the other vehicle through vehicle-to-vehicle communication. Note that the deactivation information acquisition unit may be simply referred to as an acquisition unit.

The deactivation execution unit 117 deactivates remote control of the own vehicle. The deactivation execution unit 117 may reversibly or irreversibly deactivate the remote control. Reversibly deactivating the remote control means deactivating while allowing reactivation of the remote control, and irreversibly deactivating the remote control means deactivating so as not to reactivate the remote control. The deactivation execution unit 117 stops a remote control function of the vehicle control device 110, thereby reversibly deactivating the remote control of the own vehicle, for example. In a case of reversibly deactivating the remote control, it is preferable that the stopping of the remote control function cannot be cancelled unless authorization as to whether or not having the authority to activate the remote control is cleared. In a case of irreversibly deactivating the remote control, the deactivation execution unit 117 may delete a section of the program PG1 for enabling the remote control function, which is stored in the memory 112, thereby irreversibly deactivating the remote control of the own vehicle, for example. The deactivation execution unit 117 may stop a communication function of the communication device 130, thereby irreversibly deactivating the remote control of the own vehicle. If an irreversibly openable/closable relay is provided between the vehicle control device 110 and the communication device 130, the deactivation execution unit 117 may open/close the relay to cut off the connection between the vehicle control device 110 and the communication device 130, thereby irreversibly deactivating the remote control of the own vehicle. The deactivation execution unit 117 may burn a circuit with a current, thereby irreversibly deactivating the remote control.

As shown in Fig. 1, the remote control device 200 is configured with a computer equipped with the processor 201, the memory 202, the input/output interface 203, and the internal bus 204. The processor 201, the memory 202, and the input/output interface 203 are connected through the internal bus 204 such that they can bidirectionally communicate with each other. The input/output interface 203 is connected with a communication device 205 for wireless communication with each of the vehicles 100 and cameras CM as described later. The communication device 205 may wirelessly communicate with the vehicles 100 and communicate with the cameras CM through wired communication. The memory 202 stores a program PG2. The processor 201 executes the program PG2, thereby functioning as a remote control unit 210 and a deactivation command unit 220.

The remote control unit 210 remotely controls the vehicle 100. The deactivation command unit 220 supplies a deactivation command to the vehicle 100. The deactivation command is a command for causing the deactivation execution unit 117 to execute deactivation of the remote control of the own vehicle. In the present embodiment, the communication device 205 can communicate with a step management device 300 through wired or wireless communication. The step management device 300 is a device for managing information regarding a manufacturing step of the vehicle 100 in the factory. The step management device 300 is configured with a computer equipped with a processor, a memory, an input/output interface, and an internal bus. The remote control unit 210 can acquire the information regarding the manufacturing step of the vehicle 100 from the step management device 300, and deactivate the remote control of the vehicle 100 depending on progress of the manufacturing step of the vehicle 100. Note that the remote control device 200 may be referred to as a remote control deactivation device.

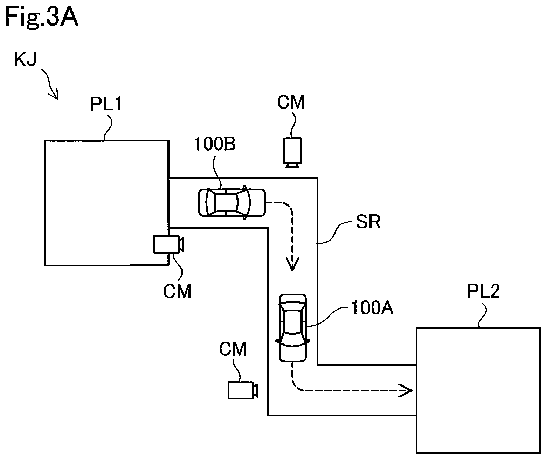

Fig. 3A is a diagram illustrating the vehicles 100 running by remote control in a factory KJ where the vehicles 100 are manufactured. Fig. 3A illustrates two vehicles 100A, 100B. In the following description, the vehicle 100A may be referred to as a first vehicle 100A or a first moving object 100A, and the vehicle 100B may be referred to as a second vehicle 100B or a second moving object 100B. The first vehicle 100A and the second vehicle 100B are simply referred to as the vehicle 100 or a moving object 100 in a case of describing without particularly distinguishing between them.

The factory KJ has a first place PL1 and a second place PL2. The first place PL1 and the second place PL2 are connected by a track SR on which the vehicle 100 can run. The first place PL1 is, for example, a place where an assembly step of the vehicle 100 is performed, and the second place PL2 is, for example, a place where an inspection step of the vehicle 100 is performed. When the assembly step at the first place PL1 has been completed, the vehicle 100 is in a state capable of running by remote control. At this point, the vehicle 100 may be in a state where installation of all the parts has been completed, or a state where installation of all the parts has not been completed. Therefore, when the assembly step at the first place PL1 has been completed, at least some of interior parts such as a driver's seat and a dashboard may not be installed in the vehicle 100, or at least some of exterior parts such as a bumper and a fender may not be installed in the vehicle 100, or the vehicle 100 may not have a body shell. In this case, a step of installing the remaining parts may be performed at the second place PL2. Note that the first place PL1 may be a place where the inspection step of the vehicle 100 is performed, and the second place PL2 may be a place where the vehicle 100 waiting for shipment is stored.

A method for running the vehicle 100 by remote control by the remote control unit 210 will be briefly described with reference to Fig. 3A. In Fig. 3A, the remote control unit 210 remotely controls the vehicle 100 such that the vehicle 100 runs from the first place PL1 to the second place PL2 through the track SR. The remote control unit 210 starts the remote control of the vehicle 100 after receiving information indicating that the assembly step of the vehicle 100 has been completed and an identification number of the vehicle 100 from the step management device 300. The remote control unit 210 determines a target route for the vehicle 100 to run from the first place PL1 to the second place PL2 through the track SR. In the present embodiment, the target route refers to a reference route as described later. In the factory KJ, a plurality of cameras CM for capturing the track SR is installed, and the remote control unit 210 can analyze a video captured by each of the cameras CM, thereby obtaining a position and orientation of the vehicle 100 relative to the target route in real time. If an external sensor such as an in-vehicle camera and LiDAR is installed in the vehicle 100, the remote control unit 210 may use the external sensor installed in the vehicle 100, rather than the cameras CM installed in the factory KJ, to obtain the position and orientation of the vehicle 100 relative to the target route. The remote control unit 210 generates a control command for running the vehicle 100 along the target route and transmits the control command to the vehicle 100. In the present embodiment, the control command refers to a running control signal as described later. The vehicle control device 110 installed in the vehicle 100 controls the actuator group 120 in accordance with the received control command, thereby running the vehicle 100. Accordingly, it is possible to move the vehicle 100 from the first place PL1 to the second place PL2 by the remote control without using any transport device such as a crane or a conveyer. After the vehicle 100 arrives at the second place PL2, the remote control unit 210 transmits information indicating that the vehicle 100 has arrived at the second place PL2 and the identification number of the vehicle 100 to the step management device 300.

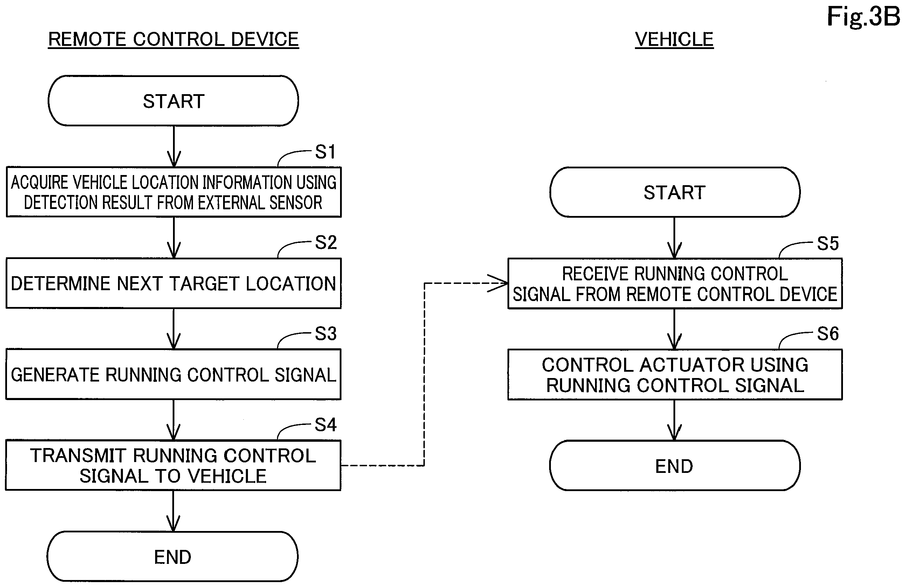

FIG. 3B is a flowchart showing a processing procedure for running control of the vehicle 100 in the first embodiment. In step S1, the remote control unit 210 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory KJ. In the present embodiment, the reference coordinate system of the factory KJ is a global coordinate system and a location in the factory KJ can be expressed by X, Y, and Z coordinates in the global coordinate system. In the present embodiment, the external sensor is a camera CM that is disposed in the factory KJ and outputs a captured image as detection result. In step S1, the remote control unit 210 acquires the vehicle location information using the captured image acquired from the camera CM as the external sensor.

More specifically, in step S1, the remote control unit 210 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the remote control system 10 or outside the remote control system 10. The detection model is stored in advance in a memory 202 of the remote control device 200, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The remote control unit 210 can acquire the orientation of the vehicle 100 through estimation based on the direction of a motion vector of the vehicle 100 detected from change in location of a feature point of the vehicle 100 between frames of the captured images using optical flow process, for example.

In step S2, the remote control unit 210 determines a target location to which the vehicle 100 is to move next. In the present embodiment, the target location is expressed by X, Y, and Z coordinates in the global coordinate system. The memory 202 of the remote control device 200 contains a reference route stored in advance as a route along which the vehicle 100 is to run. The route is expressed by a node indicating a departure place, a node indicating a way point, a node indicating a destination, and a link connecting nodes to each other. The remote control unit 210 determines the target location to which the vehicle 100 is to move next using the vehicle location information and the reference route. The remote control unit 210 determines the target location on the reference route ahead of a current location of the vehicle 100.

In step S3, the remote control unit 210 generates a running control signal for causing the vehicle 100 to run toward the determined target location. In the present embodiment, the running control signal includes an acceleration and a steering angle of the vehicle 100 as parameters. The remote control unit 210 calculates a running speed of the vehicle 100 from transition of the location of the vehicle 100 and makes comparison between the calculated running speed and a target speed of the vehicle 100 determined in advance. If the running speed is lower than the target speed, the remote control unit 210 generally determines an acceleration in such a manner as to accelerate the vehicle 100. If the running speed is higher than the target speed as, the remote control unit 210 generally determines an acceleration in such a manner as to decelerate the vehicle 100. If the vehicle 100 is on the reference route, remote control unit 210 determines a steering angle and an acceleration in such a manner as to prevent the vehicle 100 from deviating from the reference route. If the vehicle 100 is not on the reference route, in other words, if the vehicle 100 deviates from the reference route, the remote control unit 210 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the remote control unit 210 transmits the generated running control signal to the vehicle 100. The remote control unit 210 repeats the acquisition of vehicle location information, the determination of a target location, the generation of a running control signal, the transmission of the running control signal, and others in a predetermined cycle.

In step S5, the vehicle control unit 115 of the vehicle 100 receives the running control signal transmitted from the remote control device 200. In step S6, the vehicle control unit 115 controls the actuator group 120 of the vehicle 100 using the received running control signal, thereby causing the vehicle 100 to run at the acceleration and the steering angle indicated by the running control signal. The vehicle control unit 115 repeats the reception of a running control signal and the control over the actuator group 120 in a predetermined cycle.

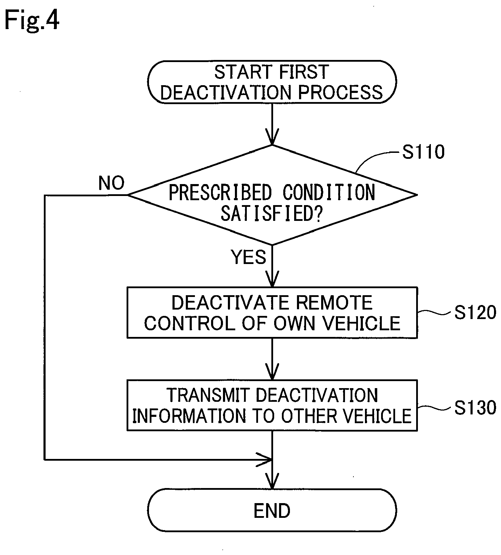

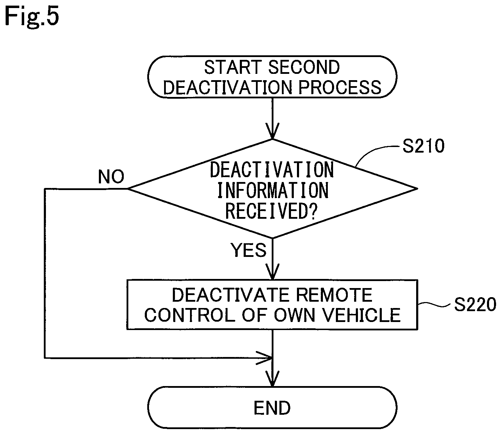

Fig. 4 is a flowchart illustrating contents of a first deactivation process. Fig. 5 is a flowchart illustrating contents of a second deactivation process. A remote control deactivation method performed in the remote control system 10 will be described with reference to Figs. 4 and 5.

The first deactivation process shown in Fig. 4 is repeatedly performed by the processor 111 of the vehicle control device 110 while the remote control of the vehicle 100 is being activated. Once the first deactivation process is started, in step S110, the deactivation execution unit 117 determines whether or not a prescribed condition is satisfied. The prescribed condition means that the deactivation command is received from the deactivation command unit 220 of the remote control device 200, for example. When receiving information indicating that the inspection step of the vehicle 100 has been completed at the second place PL2 from the step management device 300, for example, the deactivation command unit 220 transmits the deactivation command to the vehicle 100. The prescribed condition is not limited to that the deactivation command is received from the deactivation command unit 220 of the remote control device 200, and may be that a prescribed operation is performed for the own vehicle by a worker or that the own vehicle arrives at a prescribed position. When the prescribed condition is not determined to be satisfied in step S110, the deactivation execution unit 117 skips the processing after step S110 and ends the first deactivation process. When the prescribed condition is determined to be satisfied in step S110, the deactivation execution unit 117 deactivates the remote control of the own vehicle in step S120 and transmits the deactivation information to the other vehicle in step S130. Thereafter, the deactivation execution unit 117 ends the first deactivation process.

The second deactivation process shown in Fig. 5 is repeatedly performed by the processor 111 of the vehicle control device 110 while the remote control of the vehicle 100 is being activated. Once the second deactivation process is started, in step S210, the deactivation information acquisition unit 116 determines whether or not the deactivation information is received. When it is not determined in step S210 that the deactivation information is received, the deactivation information acquisition unit 116 skips the processing after step S210 and ends the second deactivation process. When it is determined in step S210 that the deactivation information is received, the deactivation execution unit 117 deactivates the remote control of the own vehicle in step S220. Thereafter, the deactivation execution unit 117 ends the second deactivation process.

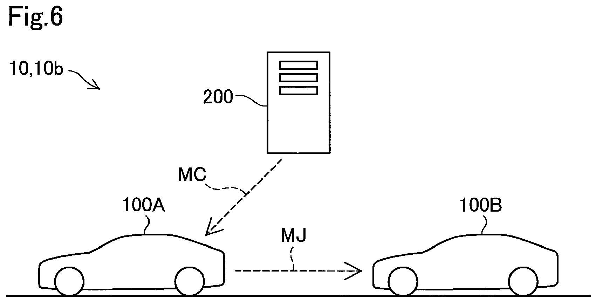

Fig. 6 is a diagram illustrating how the remote control of the vehicles 100 is deactivated in the remote control system 10. Fig. 6 illustrates the first vehicle 100A and the second vehicle 100B as shown in Fig. 3. The progress of the manufacturing step of the first vehicle 100A is more advanced than the progress of the manufacturing step of the second vehicle 100B. For example, immediately after the inspection step of the first vehicle 100A is finished, the inspection step of the second vehicle 100B is in progress or has not begun yet. When the step management device 300 notifies the remote control device 200 that the inspection step of the first vehicle 100A has been completed, a deactivation command MC is transmitted from the deactivation command unit 220 of the remote control device 200 to the first vehicle 100A. When the deactivation command MC is transmitted to the first vehicle 100A, the remote control of the first vehicle 100A is deactivated by the first deactivation process, and deactivation information MJ is transmitted from the first vehicle 100A. When the deactivation information MJ is transmitted from the first vehicle 100A, the remote control of the second vehicle 100B is deactivated by the second deactivation process. Therefore, even if the deactivation command unit 220 does not transmit the deactivation command MC to the first vehicle 100A and the second vehicle 100B, it is possible to deactivate the remote control of the first vehicle 100A and the second vehicle 100B by simply transmitting the deactivation command MC to the first vehicle 100A.

According to the remote control system 10 in the present embodiment as described above, it is possible to deactivate the remote control of a plurality of vehicles 100A, 100B. Accordingly, it is possible to prevent the remote control of each of the vehicles 100A, 100B by a third party. Especially in the present embodiment, when the remote control of one vehicle 100A is deactivated, the deactivation information MJ is transmitted from the vehicle 100A with the remote control thereof being deactivated, and the remote control of the other vehicle 100B which receives the deactivation information MJ is also deactivated. Therefore, it is possible to efficiently deactivate the remote control of a plurality of vehicles 100A, 100B.

### B. Second Embodiment

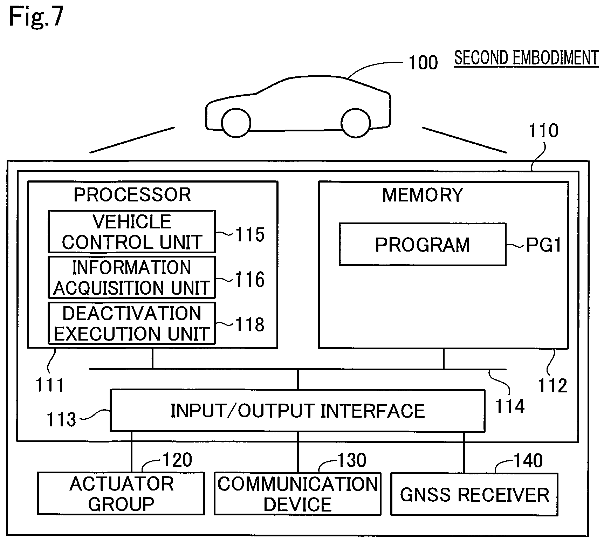

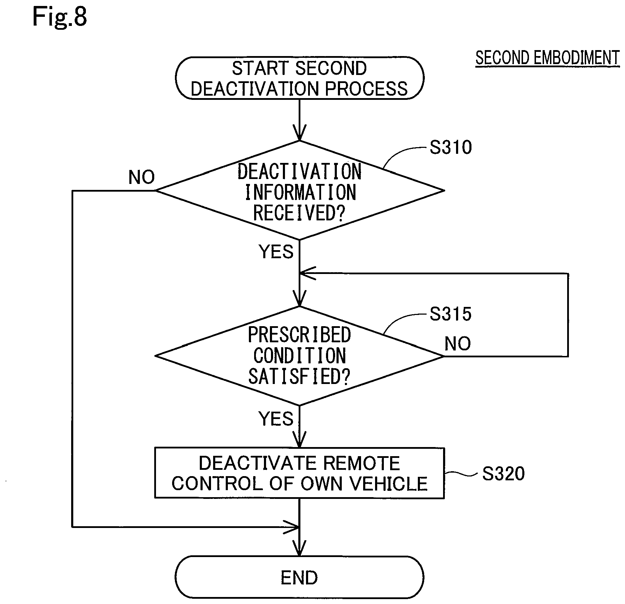

Fig. 7 is a diagram illustrating a configuration of the vehicle 100 included in a remote control system 10b in a second embodiment. Fig. 8 is a flowchart illustrating contents of a second deactivation process performed in the remote control system 10b. The present embodiment is different from the first embodiment in that, in the second deactivation process, the remote control is deactivated when the prescribed condition is determined to be satisfied after it is determined that the deactivation information is received. The other configuration is the same as the first embodiment unless otherwise specified.

As shown in Fig. 7, in the present embodiment, each vehicle 100 has a GNSS (Global Navigation Satellite System) receiver 140 to acquire position information of the own vehicle. The GNSS receiver 140 is, for example, a GPS (Global Positioning System) receiver.

As shown in Fig. 8, once the second deactivation process is started, in step S310, the deactivation execution unit 117 determines whether or not the deactivation information is received. When it is not determined in step S310 that the deactivation information is received, the deactivation execution unit 117 skips the processing after step S310 and ends the second deactivation execution process. When it is determined in step S310 that the deactivation information is received, the deactivation execution unit 117 determines whether or not the prescribed condition is satisfied in step S315. In the present embodiment, the prescribed condition in step S315 means that the own vehicle arrives at a position where the remote control of the other vehicle is deactivated. The deactivation information transmitted from the other vehicle includes position information indicative of the position where the remote control of the other vehicle is deactivated. The deactivation execution unit 117 can use the GNSS receiver 140 to acquire position information indicative of a current position of the own vehicle, and detect that the own vehicle arrives at the position where the remote control of the other vehicle is deactivated using the position information regarding the own vehicle and the position information included in the deactivation information.

When the prescribed condition is not determined to be satisfied in step S315, the deactivation execution unit 117 repeats the processing of step S315 until the prescribed condition is determined to be satisfied. The deactivation execution unit 117 may end the second deactivation process when the prescribed condition is not determined to be satisfied even after a prescribed time period has elapsed or when receiving a command for cancelling the deactivation of the remote control before the prescribed condition is satisfied. When the prescribed condition is determined to be satisfied in step S315, the deactivation execution unit 117 deactivates the remote control of the own vehicle in step S320. Thereafter, the deactivation execution unit 117 ends the second deactivation process.

According to the remote control system 10b in the present embodiment as described above, when the prescribed condition is satisfied after receiving the deactivation information, the remote control is deactivated. In an embodiment where the remote control is deactivated immediately after receiving the deactivation information, the remote control of the preceding vehicle 100 is deactivated after it arrives at a destination, and the deactivation information is transmitted, so that a disadvantage may occur that the remote control of the following vehicle 100 is deactivated before it arrives at the destination. In the present embodiment, when the following vehicle 100 receives the deactivation information and then arrives at a position where the remote control of the preceding vehicle 100 is deactivated, the remote control of the following vehicle 100 is deactivated. Therefore, it is possible to prevent occurrence of the above-mentioned disadvantage. Additionally, it is possible to sequentially deactivate the remote control of each vehicle 100 at the same position.

For example, when a plurality of vehicles 100 are loaded onto a trailer and transported from the factory KJ to a dealership, the position where the remote control of each vehicle 100 is deactivated may be a position where each vehicle 100 is loaded onto the trailer. In this case, each vehicle 100 can be moved by remote control to the position where loading onto the trailer is performed, and the remote control of each vehicle 100 can be deactivated before it is shipped from the factory KJ. Additionally, the position where the remote control of each vehicle 100 is deactivated may not be inside the factory KJ, but may be, for example, on a premise of the dealership. In this case, loading onto the trailer and the like can be performed by remote control.

Furthermore, the prescribed condition in the second deactivation process may be that a prescribed time period has elapsed after determining that the deactivation information was received, or that the own vehicle has moved a prescribed distance from a position where it was determined that the deactivation information was received. The deactivation execution unit 117 can use the GNSS receiver 140 to detect that the own vehicle has moved the prescribed distance from the position where it was determined that the deactivation information was received. Also in a case that the prescribed condition means that the prescribed time period has elapsed after determining that the deactivation information was received, or that the own vehicle has moved the prescribed distance from the position where it was determined that the deactivation information was received, it is possible to prevent the occurrence of the disadvantage that the remote control of the following vehicle 100 is deactivated before it arrives at the destination.

### C. Third Embodiment

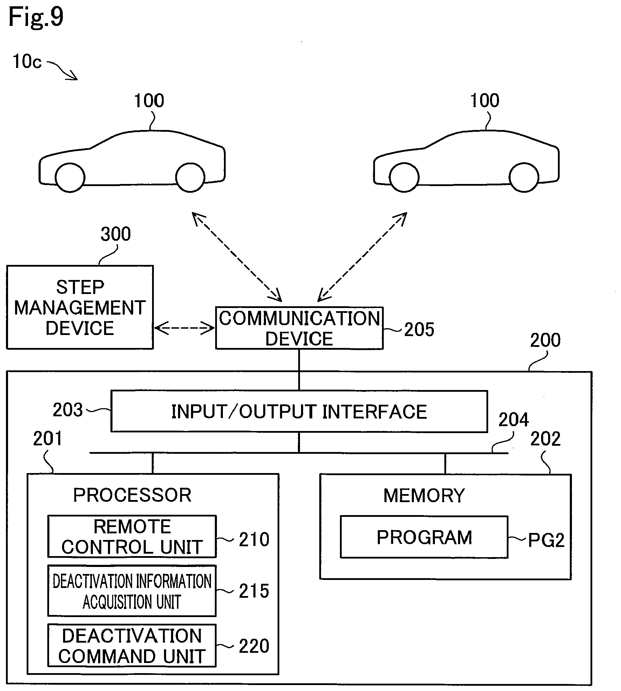

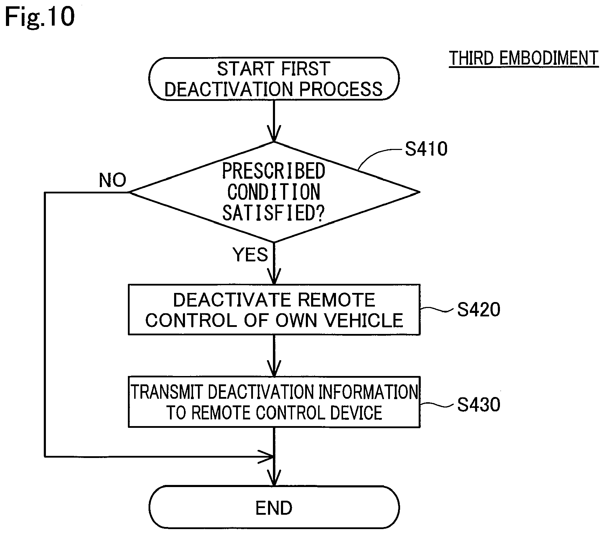

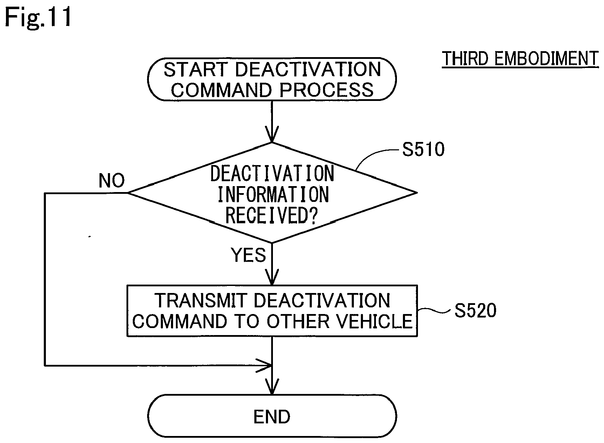

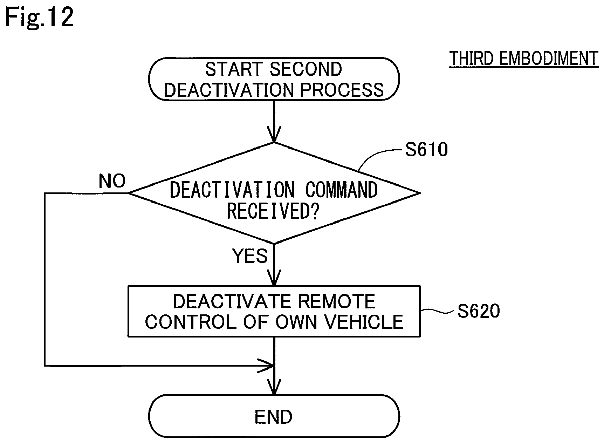

Fig. 9 is a diagram illustrating a configuration of a remote control system 10c in a third embodiment. Fig. 10 is a flowchart illustrating contents of the first deactivation process performed in the remote control system 10c. Fig. 11 is a flowchart illustrating contents of a deactivation command process performed in the remote control system 10c. Fig. 12 is a flowchart illustrating contents of the second deactivation process performed in the remote control system 10c. The present embodiment is different from the first embodiment in that when the remote control of the vehicle 100 is deactivated, the deactivation information is transmitted from the vehicle 100 to the remote control device 200, and the deactivation command is transmitted to the other vehicle 100 from the remote control device 200 which receives the deactivation information. The other configuration is the same as the first embodiment unless otherwise specified.

As shown in Fig. 9, in the present embodiment, the processor 201 of the remote control device 200 executes the program PG2, thereby functioning as the remote control unit 210, a deactivation information acquisition unit 215, and the deactivation command unit 220. The deactivation information acquisition unit 215 acquires the deactivation information from the vehicle 100 through the communication device 205. Note that the deactivation information acquisition unit 215 may be simply referred to as an acquisition unit. In the present embodiment, the deactivation information acquisition unit 116 shown in Fig. 2 is not provided on the vehicle 100.

Once the first deactivation process shown in Fig. 10 is started, the deactivation execution unit 117 determines whether or not the prescribed condition is satisfied in step S410. When the prescribed condition is not determined to be satisfied in step S410, the deactivation execution unit 117 skips the processing after step S410 and ends the first deactivation process. When the prescribed condition is determined to be satisfied in step S410, the deactivation execution unit 117 deactivates the remote control of the own vehicle in step S420 and transmits the deactivation information to the remote control device 200 in step S430. Thereafter, the deactivation execution unit 117 ends the first deactivation process.

The deactivation command process shown in Fig. 11 is repeatedly performed by the processor 201 of the remote control device 200. Once the deactivation command process is started, the deactivation information acquisition unit 215 determines whether or not the deactivation information is received in step S510. When it is not determined in step S510 that the deactivation information is received, the deactivation information acquisition unit 215 skips the processing after step S510 and ends the deactivation command process. When it is determined in step S510 that the deactivation information is received, the deactivation command unit 220 transmits the deactivation command to the vehicle 100 other than the vehicle 100 which is a source vehicle of the deactivation information in step S520. In the present embodiment, the deactivation information includes the identification number of the source vehicle 100, such that the deactivation command unit 220 can use the identification number to identify the source vehicle 100. Thereafter, the deactivation command unit 220 ends the deactivation command process.

Once the second deactivation process shown in Fig. 12 is started, the deactivation execution unit 117 determines whether or not the deactivation command is received in step S610. When it is not determined in step S610 that the deactivation command is received, the deactivation execution unit 117 skips the processing after step S610 and ends the second deactivation process. When it is determined in step S610 that the deactivation command is received, the deactivation execution unit 117 deactivates the remote control of the own vehicle in step S620. Thereafter, the deactivation execution unit 117 ends the second deactivation process.

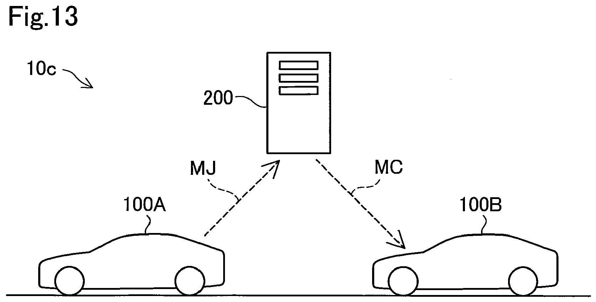

Fig. 13 is a diagram illustrating how the remote control of the vehicles 100 is deactivated in the remote control system 10c. When the remote control of the first vehicle 100A is deactivated by the first deactivation process, the deactivation information MJ is transmitted from the first vehicle 100A to the remote control device 200. When the deactivation information MJ is transmitted from the first vehicle 100A, the deactivation command MC is transmitted from the remote control device 200 to the second vehicle 100B by the deactivation command process. When the deactivation command MC is transmitted from the remote control device 200 to the second vehicle 100B, the remote control of the second vehicle 100B is deactivated by the second deactivation process.

According to the remote control system 10c in the present embodiment as described above, it is possible to deactivate the remote control of a plurality of vehicles 100A, 100B. Accordingly, it is possible to prevent the remote control of each of the vehicles 100A, 100B by a third party.

### D. Other Embodiments

(D1) In the remote control systems 10 to 10c of the respective embodiments described above, the remote control unit 210 is provided on the remote control device 200. In contrast, the remote control unit 210 may be provided on a computer different from the remote control device 200. In this case, the computer may be referred to as a remote control device, and the remote control device 200 may be referred to as a remote control deactivation device.

(D2) In the remote control system 10 of the first embodiment and the remote control system 10b of the second embodiment as described above, the deactivation information acquisition unit 116 may not be provided on the first vehicle 100A.

(D3) In the remote control system 10 of the first embodiment and the remote control system 10b of the second embodiment as described above, the deactivation execution unit 117 may transmit the deactivation information to the other vehicle after deactivating the remote control of the own vehicle by the second deactivation process. In this case, it is possible to deactivate, by the second deactivation process, the remote control of the vehicle 100 which is located far from the vehicle 100 whose remote control is deactivated by the first deactivation process.

(D4) In the remote control system 10b of the second embodiment as described above, determination of whether or not the prescribed condition is satisfied in the second deactivation process may be performed in the remote control device 200, not in the vehicle 100. In this case, information necessary for determining whether or not the prescribed condition is satisfied is transmitted from the vehicle 100 to the remote control device 200.

(D5) In the remote control systems 10 to 10c of the respective embodiments as described above, the type of the first vehicle 100A may be different from that of the second vehicle 100B. For example, the first vehicle 100A may be an electric car and the second vehicle 100B may be a gasoline-powered car.

(D6) In the remote control systems 10 to 10c of the respective embodiments as described above, the vehicle 100 is run by remote control in the factory KJ where the vehicle 100 is manufactured. In contrast, the vehicle 100 may be run by remote control outside the factory KJ. The vehicle 100 may be run by remote control on a premise of a dealership where the vehicle 100 is sold, or at a port where the vehicle 100 is loaded, for example.

(D7) In the remote control systems 10 to 10c of the respective embodiments as described above, in a case that the remote control systems 10 to 10c include three or more vehicles 100, the deactivation execution unit 117 may deactivate the remote control of the own vehicle when the remote control of the other vehicle located ahead of and closest to the own vehicle is deactivated, that is, the remote control of the other vehicle located right in front of the own vehicle is deactivated. Alternatively, the deactivation execution unit 117 may deactivate the remote control of the own vehicle when the remote control of the other vehicle located ahead of and nth closest to the own vehicle is deactivated. "n" herein is a natural number of two or more. Alternatively, the deactivation execution unit 117 may deactivate the remote control of the own vehicle when the remote control of a prescribed number or more of the other vehicles which are located in front of the own vehicle is deactivated.

(D8) In each of the above-described embodiments, the external sensor is not limited to the camera but may be the distance measuring device, for example. The distance measuring device is a light detection and ranging (LiDAR) device, for example. In this case, detection result output from the external sensor may be three-dimensional point cloud data representing the vehicle 100. The remote control device 200 and the vehicle 100 may acquire the vehicle location information through template matching using the three-dimensional point cloud data as the detection result and reference point cloud data, for example.

(D9) In the above-described first embodiment, the remote control device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The remote control device 200 may acquire vehicle location information, determine a target location to which the vehicle 100 is to move next, and generate a route from a current location of the vehicle 100 indicated by the acquired vehicle location information to the target location. The remote control device 200 may generate a route to the target location between the current location and a destination or generate a route to the destination. The remote control device 200 may transmit the generated route to the vehicle 100. The vehicle 100 may generate a running control signal in such a manner as to cause the vehicle 100 to run along the route received from the remote control device 200 and control an actuator using the generated running control signal.
(2) The remote control device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the remote control device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D10) In the above-described first embodiment, the remote control device 200 automatically generates a running control signal to be transmitted to the vehicle 100. By contrast, the remote control device 200 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the remote control device 200 through wire communication or wireless communication, for example, and the remote control device 200 may generate a running control signal responsive to the operation on the operating device.

(D11) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory KJ, or a remaining component such as a bodyshell may be mounted on the vehicle 100 after the vehicle 100 is shipped from the factory KJ while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D12) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D13) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The control and the method described in the present disclosure may be realized by a dedicated computer provided by configuring a processor and a memory programmed in such a manner as to implement one or a plurality of functions embodied by a computer program. Alternatively, the controller and the method described in the present disclosure may be realized by a dedicated computer provided by configuring a processor using one or more dedicated hardware logic circuits. Still alternatively, the controller and the method described in the present disclosure may be realized by one or more dedicated computers configured using a combination of a processor and a memory programmed in such a manner as to implement one or a plurality of functions, and a processor configured using one or more hardware logic circuits. The computer program may be stored as an instruction to be executed by a computer into a computer-readable tangible non-transitory recording medium.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A moving object (100) movable by remote control, comprising:
an acquisition unit (116) configured to acquire deactivation information (MJ) indicating that remote control for another moving object movable by remote control is deactivated, the another moving object being different from the moving object; and
a deactivation execution unit (117) configured to deactivate remote control for the moving object when the acquisition unit acquires the deactivation information.

2. The moving object according to claim 1, wherein
the moving object (100) is configured to move by remote control in a factory (KJ) where the moving object is manufactured.

3. The moving object according to claim 1, wherein
the deactivation execution unit (117) is configured to deactivate the remote control for the moving object (100) after a predetermined time period has elapsed since the acquisition unit (116) acquired the deactivation information.

4. The moving object according to claim 1, wherein
the deactivation execution unit (117) is configured to deactivate the remote control for the moving object (100) when the moving object has moved a predetermined distance after the acquisition unit (116) acquired the deactivation information.

5. The moving object according to claim 1, wherein
the deactivation execution unit (117) is configured to deactivate the remote control for the moving object (100) when the moving object arrives at a position where the remote control for the another moving object is deactivated after the acquisition unit (116) acquired the deactivation information.

6. The moving object according to claim 1, wherein
the acquisition unit (116) is configured to acquire the deactivation information from the another moving object.

7. A remote control deactivation system (10c), comprising:
a first moving object (100A) configured to be movable by remote control;
a second moving object (100B) configured to be movable by remote control, the second moving object including a deactivation execution unit (117) configured to deactivate remote control for the second moving object;
an acquisition unit (215) configured to acquire deactivation information (MJ) indicating that remote control for the first moving object is deactivated; and
a deactivation command unit (220) configured to supply a command for deactivating the remote control for the second moving object to the deactivation execution unit (117) when the acquisition unit (215) acquires the deactivation information.

8. A remote control deactivation method, comprising:
detecting that remote control for a first moving object (100A) movable by remote control is deactivated; and
deactivating remote control for a second moving object (100B) movable by remote control when detecting that the remote control for the first moving object is deactivated, the second moving object being different from the first moving object.
